# EUROPEAN PATENT APPLICATION

(11) **EP 2 565 256 A1**
(43) Date of publication of application: **06.03.2013**
(21) Application number: 12182316.5
(22) Date of filing: 30.08.2012
(51) Int. Cl.: C10L 9/08, C10L 5/46, C10L 5/44

(54) **Reprocession of polluted biomass streams**

(30) Priority: 30.08.2011 BE 201100518
(71) Applicant: Renovius Management, 3900 Overpelt (BE)
(72) Inventor: Elen, Henri, 3900 Overpelt (BE)
(74) Representative: Caers, Raphael Frans Ivo

(57) **Abstract**

A process, which may appropriately be called a bio-refinery, is described for reprocessing polluted waste streams containing biomass but also salts, and which is characterized by subjecting the biomass to a thermal hydrolysis step, wherein also salts are washed out, separating the solid and liquid product thereof, drying the solid product, separating the liquid product into, on one hand a concentrate rich in water-soluble salts which is removed, and on the other hand a low-salt water product, and at least partial recycling the low-salt water product upstream in the bio-refinery.

## Description

### SCOPE OF THE INVENTION

The present invention relates to the reprocessing of polluted waste streams containing biomass, for example residues from agriculture, such as grass and straw, digestate, verge cuttings and/or liquid manure, and the recovery of this biomass as bio fuel, useful for example for generating electricity, or as a growth medium for plants. More particularly, the invention relates to the thermal hydrolysis of these waste streams in order to simplify reprocessing thereof and to increase the recovery value thereof.

### BACKGROUND OF THE INVENTION

In the context of rising concerns related to greenhouse gases, more specifically the "carbon footprint" of mankind on the earth, there is increasing interest in the use of so-called "bio fuels", i.e. fuels extracted from renewable energy sources, for example from biomass, so they do not contribute to carbon emissions, particularly CO₂ emissions from human activity because of their energy needs. Thus more and more wood, preferably waste wood or sawdust from the wood processing industry, where necessary first converted to wood pellets, is used as fuel for the generation of, for example, electricity.

Because also for these renewable energy sources, competition exists for other applications often with a higher final value, such as the manufacture of fibre boards, many of these renewable sources become scarce and therefore unaffordable as an energy source. This applies especially to those sources that are sufficiently pure or can be purified with simple techniques such that they may be used in those high-grade applications.

However, there are important biomass streams that are too polluted for those high-grade applications. But also its use as a bio fuel has its problems. The biomass usually contains too much water to be a good fuel, and an important part of that water is trapped in the cellular structure and can only with difficulty and slowly be dehydrated, so reprocessing becomes too time consuming.

US 3992784 describes a process for the removal of ash-forming constituents and bound water from less conventional solid fuels such as bituminous coal, xyloid lignite, or other types of lignite, but also from peat, wood, paper, plant matter, sewage sludge and the like. An aqueous slurry of finely divided starting matter is exposed to a temperature of 250°C at a pressure above the vapour pressure of water at that temperature. At high ash contents, a binding agent which is insoluble in water is also used, such as butane or naphtha, such that the carbon-containing particles clump together to form larger particles, which can then be separated by sieves from the finer ash-forming constituents which remain as a dispersion in water, and which can later be separated into solid ash and clean water, which is recycled.

WO 96/09882 and WO 2011/06854 describe variations of a method and a device designed to unlock organic matter or biomass by thermal hydrolysis followed by steam explosion. No further detail is given relating to the biomass which serves as the input, nor about what should be done further with the product of the described method. WO 2006/006863 describes a method for thermally treating biological matter such as sawdust, wood, or the like, with steam after drying, to break down its fibrous structure and form lignin or wood dust, for subsequently drying it further and for pressing it into fuel pellets or bio fuel. Hereby, temperatures of 200-300°C are employed. Saw dust and wood are very pure biomasses and therefore easy to reprocess into acceptable bio fuel. WO 00/73221 describes a process for the continuous hydrolysis of sludge from biological treatment steps from the wood-processing, the chemical and/or the food-processing industry. These are also very pure biomasses which are easy to reprocess.

DE 10 2009 015 257 A1 also describes a process and device intended for the hydrothermal carbonization of biomass, in order to convert it into humus, coal, fertilizer and water. The starting materials mentioned in this document are all of a relatively high quality. DE 10 2009 015 257 A1 treats the starting materials in a reactor at about 210°C and 20 bar in the presence of a substantial amount of water. The sediment is flash evaporated when it comes out of the reactor, and is further dried to become a bio fuel as the final product. The aqueous phase also undergoes a flash in its relaxation from the reactor zone. The thereby released vapor, together with exhaust gases from the drying of the sediment, is washed in order to remove the entrained solid constituents and return them to the inlet. DE 10 2009 015 257 A1 is concerned with the heat and water management of the entire process. Any water that leaves the process does so as vapor or after condensation. Water-soluble salts which would enter with the input therefore have to leave the process together with the bio fuel, or with the fertilizer which is separated off as an aqueous phase still upstream of the reactor and concentrated by evaporation. Since none of these final products are allowed to contain many salts, the input streams of DE 10 2009 015 257 A1 may not contain many salts.

Several of the in the context of the present invention above-mentioned streams are, however, often still too polluted to be able to serve as a bio fuel, or to be reprocessed for this purpose, for example because they give rise to too much ash formation, or to ash that is ecologically problematic by itself because of its composition. Several waste streams are for example much too mixed with sand, gravel and stones, plastic and metal objects, while also still far too rich in a lot of salts and/or heavy metals. The salts and heavy metals are thereby trapped to a large extent in the structure of the organic matter, such that they cannot be sufficiently washed. Since there are currently no acceptable methods available to reprocess these streams into a usable product, such streams are still mostly composted, or even deposited in landfills, which in all cases entails an additional cost, both economically and ecologically and in terms of spatial planning.

NL 1029909 describes a process for the treatment of biomass which is (too) wet. It is treated without prior drying, preferably during at least 60 minutes in a torrefaction reactor, at a torrefying temperature between 200-320°C and at sufficient pressure such that the water does not yet evaporate. The treated biomass is then cooled down while still pressurized to preferably below 50°C, and then expanded to atmospheric pressure. The biomass formed thusly is hydrophobic, and is as dry biomass fuel excellently grindable, has a relatively high energy density and is suitable for long term storage. The process is particularly suitable for reed sods, sewage sludge or vegetable/fruit/garden waste (compostable waste) and for biomass with a relatively high alkali metal and chlorine content, such as grass. During the torrefaction, the water absorbs the salts present in the biomass, such as potassium and chlorine, and the water-soluble salts are largely removed from the produced biomass fuel. As a result, an improved reuse of the ashes after incineration of the biomass is possible. In a purification plant, contaminants, such as inorganic components, are removed from the separated process water in a manner that will not be described further, such that the purified water contains substantially only chloride, sulphate, potassium, and sodium in solution, which are harmless salts for a marine environment, and permits preferably a discharge at sea. Torrefaction is a process sufficiently known in the art. It is for example described in detail in document ECN-E--06-021, by J. R. Pels and P. C. A. Bergman, "TORWASH - Proof of Principle - Phase 1", December 2006. The process of NL 1029909 requires a large supply of fresh water and is only suitable for relatively pure biomass streams. The torrefaction also occurs at a relatively high temperature and pressure. NL 1029909 does also not make it clear how the water from the torrefaction, with all its salts from alkali metals, should be purified before permitting its discharge at sea as salt water.

Hence, there is a need for a process that is capable of also reprocessing very polluted waste streams, especially those with a high salt content, in a more suitable way into usable product streams, such as, for example, into a bio fuel that can be accepted by appropriate incineration plants.

In agriculture and horticulture still other problems arise. Governments are increasingly concerned about the level of presence of heavy metals, such as cadmium and lead, in agricultural crops and farmland, about the level of presence of organic and inorganic pollution, mainly phosphate, nitrate and nitrite, in groundwater, as well as about the presence of soluble aluminium compounds in drinking water and in crops, since they are associated with Alzheimer's disease and with the premature death of trees.

WO 93/14046 describes a method for converting biological sludge from water treatment, which is increasingly difficult to be allowed to deposit in landfills, to a product that is sterile and stable, with lower heavy metals content and with unique properties, because of the form in which they contain nitrogen and phosphorus, in particular between 5-25% by weight of water-soluble nitrogen, primarily in the form of urea and ammonium salts. The method involves a brief heating-up to at least 180°C in the presence of a strong inorganic acid, such as sulphuric acid, at a pH of no more than 1. 5 and in the presence of aluminium (III) and iron (III) salts as catalyst, whereby the cellulose present is partially hydrolyzed to water-soluble constituents, and after which the solid final product is obtained by filtration, which has a low metal content and is usable as a soil improver or, after the increase of its pH, is possibly deemed compostable to become an excellent growth medium. From the filtrate, the metals are then precipitated out step by step with increasingly higher pHs, wherein a first sediment is usable as a flocculant, and a second one containing the heavy metals is to be deposited. The cleared liquid is then further evaporated until preferably 30% by weight of solid matter in a solution that is microbiologically stable. The concentrated solution would be usable as a carbon source in denitrification, or as a fertilizer or soil improver. By spray-drying, it can be converted to a water-soluble powder. The method of WO 93/14046 has the disadvantage that it uses large amounts of chemicals, and also that it starts with a still relatively not very polluted raw material.

At present, a lot of peat is still used in agriculture and horticulture, for example as a soil structure improver or as part of a growth medium or growth substrate for plants, such as in potting soil. This has recently led to some concern, particularly because peat is mainly mined in nature reserves. These areas are often the habitat of rare flora and fauna, and are severely disrupted by these mining activities. Due to the relatively long formation process of peat, peat is also regarded as a fossil fuel, and its usage as contributing to the "carbon footprint". For these reasons, using peat as growth medium or growth substrate for plants is getting a questionable reputation. For example, in some countries legislation has been introduced or is in preparation which would no longer allow the admixture of peat in potting soil or other growth medium or growth substrate for plants. These applications will then be obliged to look for other usable raw materials for the supply of the necessary organic matter. To be admissible in this application, the raw material must already be quite pure, for example have a limited salt content, create no odour problems, and meet certain requirements related to bacterial hygiene.

Thus, there is an additional need for an organic matter that is suitable for replacing peat as part of growth medium for plants, such as potting soil.

The object of the present invention is to avoid or at least alleviate the above-described problems and/or to provide improvements in general.

### SUMMARY OF THE INVENTION

According to the invention, a process or method is provided as defined in each of the hereby appended claims.

The invention provides a method for reprocessing of a polluted waste stream that contains biomass, which method comprises the steps of
a. thermal hydrolysis of at least a part, and preferably the whole, of the polluted waste stream in the form of an aqueous suspension, which suspension has a conductivity of at least 100 microSiemens/cm (µS/cm), in a reactor at a temperature of at least 125°C and less than 200°C and at a sufficiently high pressure to keep water liquid, to form a hydrolyzed reactor product, followed by an expansion step in which the pressure of the reactor product is reduced, while at the same time salts are washed out from the biomass into the aqueous phase,
b. separating the hydrolyzed reactor product from step a in a solid reactor product and a liquid reactor product, and wherein the liquid reactor product is at least partially recycled, directly or indirectly, to step a,
c. separating at least a part of the liquid reactor product from step b in a salt-rich concentrate and a low-salt water product, in which the concentrate is salt-rich due to water-washable salts, wherein the salt-rich concentrate is removed, and wherein the low-salt water product is at least in part recycled, directly or indirectly, to step a and/or b, and
d. the drying of the solid reactor product from step b to a dried organic product.

Thereby, the salt-rich concentrate and the low-salt water product from step c are preferably both liquid and water-based products.

The inventors have found that this combination of processing steps allows an effectively reprocessing of also biomass, present in very polluted streams in a technically and economically acceptable way into usefully deployable product streams, such as for example bio fuel. The inventors have found that the thermal hydrolysis step breaks the cellular structure of the biomass, such that a much better and very efficient separation of solid and liquid reactor product is possible than without this thermal hydrolysis. Also, the inventors have determined that this thermal hydrolysis step is also very effective in washing water-soluble salts out from the biomass into the aqueous phase, and that therefore the salt content of the solid reactor product can be significantly reduced. An additional wash step to wash even more of the water-soluble salts out from the solid reactor product has also proved to be much more effective, due to the effects of the thermal hydrolysis step on the biomass. The inventors have also found that the addition of a step in which a separation of the liquid reactor product in a salt-rich concentrate, rich in water-soluble salts on one hand, and in a low-salt water product on the other hand, allows the recycling of at least a part of this low-salt water product to the previous steps in the work process, such as for an additional step to wash out more water-soluble salts, such that the method relies less or does not rely on the supply of fresh water. In addition, the process according to the present invention has the advantage that it does not need significant quantities of chemicals, such as to strongly adjust the pH of some of the streams in the process.

The present invention is clearly different from the processes described in DE 10 2009 015 257 A1 or US 3992784, which are concerned with the energy and water management, but not with any salt management, and which are clearly not suitable to manufacture products with a lower content of water-soluble salts than the input biomass streams.

### BRIEF DESCRIPTION OF THE FIGURES

Figure 1 shows a flow chart of a part of the method according to a particular embodiment of the present invention, according to which a solid waste stream with biomass is pre-treated.
Figure 2 shows a flow chart of the middle part of the method according to a particular embodiment of the present invention, which comprises the steps a, b, c, and d.
Figure 3 shows a flow chart of the part of the method according to a particular embodiment of the present invention, according to which the dried product can be processed further into a growth medium for plants.

### DETAILED DESCRIPTION

In an embodiment of the method according to the present invention, the aqueous suspension in step a has at least one of the following characteristics:
(i) a dry matter content of at most 50% by weight, preferably at most 48% by weight, more preferably at most 46% by weight, even more preferably at most 45% by weight, and optionally at least 5% by weight, preferably 10% by weight, more preferably 15% by weight, even more preferably at least 25% by weight, preferably at least 35% and most preferably at least 40% by weight,
(ii) a conductivity of at least 100 microSiemens/cm (µS/cm), preferably at least 200 microSiemens/cm, more preferably at least 300 microSiemens/cm, even more preferably at least 400 microSiemens/cm, preferably at least 500 microSiemens/cm, more preferably at least 600 microSiemens/cm, even more preferably at least 650 microSiemens/cm, preferably at least 700 microSiemens/cm, more preferably at least 750 microSiemens/cm, and even more preferably at least 800 microSiemens/cm, and optionally of at most 50000 µS/cm, preferably at most 45000 µS/cm, more preferably at most 40000 µS/cm, even more preferably at most 35000 µS/cm, preferably at most 30000 µS/cm, more preferably 25000 µS/cm, even more preferably at most 20000 µS/cm, preferably at most 15000 µS/cm, more preferably at most 10000 µS/cm, even more preferably at most 5000 microSiemens/cm, preferably at most 3000 microSiemens/cm, more preferably at most 2000 microSiemens/cm, and even more preferably at most 1000 microSiemens/cm,
(iii) a pH of at least 2, preferably at least 3, more preferably at least 4, even more preferably at least 5 and preferably at least six, optionally at most 9, preferably at most 8, more preferably at most 7,
(iv) a chlorine content in solution, mainly as chlorine ions, of at least 100 ppm by weight, preferably at least 300 ppm by weight, more preferably at least 500 ppm by weight, even more preferably at least 700 ppm by weight, preferably at least 900 or even 1000 ppm by weight, more preferably at least 1200 ppm by weight, even more preferably at least 1400 or even 1500 ppm by weight, preferably at least 1700 ppm by weight, more preferably at least 1800 ppm by weight, even more preferably at least 1900 ppm by weight, optionally at most 10000 ppm by weight, preferably at most 7000 ppm by weight, more preferably at most 5000 ppm by weight, and even more preferably at most 3000 ppm by weight, and this measured on the basis of the whole of aqueous phase and solid matter,
(v) a nitrogen content (N) of at least 100 ppm by weight, preferably at least 300 ppm by weight, more preferably at least 500 ppm by weight, even more preferably at least 800 ppm by weight, preferably at least 1000 or even 1400 ppm weight, more preferably at least 1700 ppm by weight, even more preferably at least 2000 or even 2500 ppm by weight, preferably at least 3000 ppm by weight, more preferably at least 4000 ppm by weight, even more preferably at least 5000 ppm by weight , optionally at most 15000 ppm by weight, preferably at most 10000 ppm by weight, more preferably at most 9000 ppm by weight, and even more preferably at most 8000 ppm by weight, and this measured on the basis of the whole of aqueous phase and solid matter,
(vi) a phosphorus content (P) of at least 50 ppm by weight, preferably at least 150 ppm by weight, more preferably at least 250 ppm by weight, even more preferably at least 400 ppm by weight, preferably at least 500 or even 700 ppm weight, more preferably at least 800 ppm by weight, even more preferably at least 1000 or even 1200 ppm by weight, preferably at least 1500 ppm by weight, more preferably at least 2000 ppm by weight, even more preferably at least 2500 ppm by weight , optionally at most 7000 ppm by weight, preferably at most 5000 ppm by weight, more preferably at most 4500 ppm by weight, and even more preferably at most 4000 ppm by weight, and this measured on the basis of the whole of aqueous phase and solid matter,
(vii) a potassium content (K) of at least 100 ppm by weight, preferably at least 300 ppm by weight, more preferably at least 500 ppm by weight, even more preferably at least 800 ppm by weight, preferably at least 1000 or even 1400 ppm by weight, more preferably at least 1700 ppm by weight, even more preferably at least 2000 or even 2500 ppm by weight, preferably at least 3000 ppm by weight, more preferably at least 4000 ppm by weight, even more preferably at least 5000 ppm by weight, optionally at most 15000 ppm by weight, preferably at most 10000 ppm by weight, more preferably at most 9000 ppm by weight, and even more preferably at most 8000 ppm by weight, and this measured on the basis of the whole of aqueous phase and solid matter,
(viii) a sulphates content (SO₄), mainly as sulphate ions, of at least 10 ppm by weight, preferably at least 30 ppm by weight, more preferably at least 50 ppm by weight, even more preferably at least 80 ppm by weight, preferably at least 100 or even 140 ppm by weight, more preferably at least 170 ppm by weight, even more preferably at least 200 or even 250 ppm by weight, preferably at least 300 ppm by weight, more preferably at least 400 ppm by weight, even more preferably at least 500 ppm by weight, optionally at most 1500 ppm by weight, preferably at most 1000 ppm by weight, more preferably at most 900 ppm by weight, and even more preferably at most 800 ppm by weight, and this measured on the basis of the whole of aqueous phase and solid matter,
(ix) a magnesium content (Mg) of at least 10 ppm by weight, preferably at least 30 ppm by weight, more preferably at least 50 ppm by weight, even more preferably at least 80 ppm by weight, preferably at least 100 or even 140 ppm by weight, more preferably at least 170 ppm by weight, even more preferably at least 200 or even 250 ppm by weight, preferably at least 300 ppm by weight, more preferably at least 400 ppm by weight, even more preferably at least 500 ppm by weight, optionally at most 1500 ppm by weight, preferably at most 1000 ppm by weight, more preferably at most 900 ppm by weight, and even more preferably at most 800 ppm by weight, and this measured on the basis of the whole of aqueous phase and solid matter,
(x) a calcium content (Ca) of at least 5 ppm by weight, preferably at least 15 ppm by weight, more preferably at least 25 ppm by weight, even more preferably at least 40 ppm by weight, preferably at least 50 or even 70 ppm by weight, more preferably at least 80 ppm by weight, even more preferably at least 100 or even 120 ppm by weight, preferably at least 150 ppm by weight, more preferably at least 200 ppm by weight, even more preferably at least 250 ppm by weight, optionally at most 800 ppm by weight, preferably at most 500 ppm by weight, more preferably at most 450 ppm by weight, and even more preferably at most 400 ppm by weight, and this measured on the basis of the whole of aqueous phase and solid matter,
(xi) an iron content (Fe) of at least 10 ppm by weight, preferably at least 30 ppm by weight, more preferably at least 50 ppm by weight, even more preferably at least 80 ppm by weight, preferably at least 100 or even 140 ppm by weight, more preferably at least 170 ppm by weight, even more preferably at least 200 or even 250 ppm by weight, preferably at least 300 ppm by weight, more preferably at least 400 ppm by weight, even more preferably at least 500 ppm by weight, optionally at most 1500 ppm by weight, preferably at most 1000 ppm by weight, more preferably at most 900 ppm by weight, and even more preferably at most 800 ppm by weight, and this measured on the basis of the whole of aqueous phase and solid matter,
(xii) a zinc content (Zn) of at least 5 ppm by weight, preferably at least 15 ppm by weight, more preferably at least 25 ppm by weight, even more preferably at least 40 ppm by weight, preferably at least 50 or even 70 ppm by weight, more preferably at least 80 ppm by weight, even more preferably at least 100 or even 120 ppm by weight, preferably at least 150 ppm by weight, more preferably at least 200 ppm by weight, even more preferably at least 250 ppm by weight, optionally at most 800 ppm by weight, preferably at most 500 ppm by weight, more preferably at most 450 ppm by weight, and even more preferably at most 400 ppm by weight, and this measured on the basis of the whole of aqueous phase and solid matter,
(xiii) a manganese content (Mn) of at least 5 ppm by weight, preferably at least 15 ppm by weight, more preferably at least 25 ppm by weight, even more preferably at least 40 ppm by weight, preferably at least 50 or even 70 ppm by weight, more preferably at least 80 ppm by weight, even more preferably at least 100 or even 120 ppm by weight, preferably at least 150 ppm by weight, more preferably at least 200 ppm by weight, even more preferably at least 220 ppm by weight, optionally at most 800 ppm by weight, preferably at most 500 ppm by weight, more preferably at most 450 ppm by weight, and even more preferably at most 400 ppm by weight, and this measured on the basis of the whole of aqueous phase and solid matter,
(xiv) a copper content (Cu) of at least 2 ppm by weight, preferably at least 7 ppm by weight, more preferably at least 10 ppm by weight, even more preferably at least 15 ppm by weight, preferably at least 20 or even 30 ppm by weight, more preferably at least 40 ppm by weight, even more preferably at least 50 or even 60 ppm by weight, preferably at least 75 ppm by weight, more preferably at least 100 ppm by weight, even more preferably at least 150 ppm by weight, optionally at most 800 ppm by weight, preferably at most 500 ppm by weight, more preferably at most 400 ppm by weight, and even more preferably at most 300 ppm by weight, and this measured on the basis of the whole of aqueous phase and solid matter,
(xv) a total metals content, being the metals selected from the list of chemical elements in the IUPAC periodic table of elements, the version of June 22, 2007 and wherein the element groups are numbered from 1 to 18, occurring in the groups denoted by numbers 1, 2, 3, 4, 5, 6, 7, 8, 9, 10, 11, 12, 13, 14 and 15, except for hydrogen (H), and which in that periodic system are located to the left of the semi-metals or metalloids, which lie on a diagonal line from boron (B) to astatine (At), mainly in ionic form, of at least 100 ppm by weight, preferably at least 300 ppm by weight, more preferably at least 500 ppm by weight, even more preferably at least 800 ppm by weight, preferably at least 1000 or even 1400 ppm by weight, more preferably at least 1700 ppm by weight, even more preferably at least 2000 or even 2500 ppm by weight, preferably at least 3000 ppm by weight, more preferably at least 4000 ppm by weight, even more preferably at least 5000 ppm by weight, optionally at most 15000 ppm by weight, preferably at most 10000 ppm by weight, more preferably at most 9000 ppm by weight, and even more preferably at most 8000 ppm by weight, and this measured on the basis of the whole of aqueous phase and solid matter,
(xvi) a heavy metals content, being the metals selected from the list of chemical elements in the IUPAC periodic table of elements, the version of June 22, 2007 and wherein the element groups are numbered from 1 to 18, occurring in the groups denoted by numbers 3, 4, 5, 6, 7, 8, 9, 10, 11, 12, 13, 14 and 15, and which in that periodic system are located to the left of the semi-metals or metalloids, which lie on a diagonal line from boron (B) to astatine (At), and in particular the metals selected from the list consisting of cadmium (Cd), lead (Pb), mercury (Hg), zinc (Zn), and iron (Fe), of together at least 100 ppm by weight, preferably at least 300 ppm by weight, more preferably at least 500 ppm by weight, even more preferably at least 800 ppm by weight, preferably at least 1000 or even 1400 ppm by weight, more preferably at least 1700 ppm by weight, even more preferably at least 2000 or even 2500 ppm by weight, preferably at least 3000 ppm by weight, more preferably at least 4000 ppm by weight, even more preferably at least 5000 ppm by weight, optionally at most 15000 ppm by weight, preferably at most 10000 ppm by weight, more preferably at most 9000 ppm by weight, and even more preferably at most 8000 ppm by weight, and this measured on the basis of the whole of aqueous phase and solid matter.

In another embodiment of the method according to the present invention, the polluted waste stream is selected from the list consisting of solid organic waste, dry agricultural residues such as heather sods, grass and/or straw, salt water biomass such as seaweed and/or algae, compostable waste such as fruit/vegetable/garden waste from municipal waste as collected from households, wet residues from the food industry, grass, straw and reed, pruning waste, roadside grass, verge cuttings, pig manure, chicken manure, cow manure, liquid manure from these or other forms of farming, purge streams containing organic matter, digestate from the ethanol fermentation or fermentation of sludge or of residue of organic matter, such as of sludge from biological oxidation of waste water, such as of waste water purification plants, and mixtures thereof, and preferably a mixture with at least a part verge cuttings and a part liquid manure. The invention has the advantage that also very polluted waste streams, which cannot or only to a very limited extent be accepted in the reprocessing methods already known in the art, can be processed, to a large extent, with the method according to the present invention, and so can result in a technically and economically acceptable way in usefully deployable input streams, such as bio fuel or as at least a part of a growth medium for plants.

In yet another embodiment of the method according to the present invention, the thermal hydrolysis in step a is performed at a temperature of at least 130°C, preferably at least 135°C, more preferably at least 140°C, even more preferably at least 145°C, preferably at least 150°C, more preferably at least 155°C, even more preferably at least 160°C, preferably at least 165°C, preferably at least 170°C, more preferably at least 175°C, even more preferably at least 180°C, preferably at least 185°C, and optionally preferably at most 195°C, more preferably at most 193°C, even more preferably at most 192°C, preferably at most 190°C. The inventors have found that these temperatures are high enough to break the cellular structure of the biomass such that a good and efficient separation of solid and liquid reactor product becomes easy, and also such that salts can be effectively washed out from the biomass. Moreover, the temperatures are sufficiently low to maintain the pressure required to keep water liquid in the thermal hydrolysis reactor, such that the design pressure on the reactor and the associated equipment is limited. Therefore, when building equipment such as the thermal hydrolysis reactor, construction materials may be used sparingly. For example, the equipment which is subjected to this pressure may be manufactured with a reduced wall thickness, which makes the construction simpler and thus cheaper. This effect becomes even greater as on account of a desired corrosion resistance more special types of steel and/or alloys should be chosen for the equipment.

In one embodiment of the method according to the present invention, the solid reactor product is, as part of step b, before it is dried in step d, washed with water to remove more salts, preferably accompanied by the use of low-salt water product originating from step c. This offers the advantage that the salt concentration of the solid products of the method can be further decreased, which increases the acceptability of these products in at least part of their potential markets, and which may allow a product of the method to be accepted in an application in which the same product but with a higher salt concentration would not be accepted.

In one embodiment of the method according to the present invention, the liquid reactor product from step b is, before it is recycled, and preferably together with the saline washing water from the washing of the solid reactor product as part of step c, if present, subjected to a step j for the separation of suspended particles, preferably suspended organic particles, and preferably by a micro-sieve or a dissolved air flotation (DAF) separation step, before it is recycled to step a and/or it is recycled to step c. This additional step offers the advantage that less organic particles are recycled upstream in the method. An additional advantage is that the liquid phase of this separation allows further processing more easily. For example, the reduction of suspended particles will ease the separation in step c of at least a part of the liquid reactor product in a salt-rich concentrate and a low-salt water product.

In one embodiment of the method according to the present invention, the liquid reactor product from step b is, before it is recycled, and preferably together with the saline washing water from the washing of the solid reactor product as part of step c, if present, and/or the liquid product of the separation of suspended particles in step j, subjected to a step k that includes a stripping for the removal of ammonia gas (NH₃), preferably by means of blowing air through, and/or the injection of steam. The inventors have found that stripping the ammonia gas from the water stream at this point in the method is most suitable to limit or exclude the possible odour problems of the method. Also, the removal of ammonia from the water stream makes it possible for the remaining organic matter in the stream to be fermented before it is recycled to the separation step c, which further eases the operations of this separation step.

In one embodiment of the method according to the present invention, the solid reactor product has a conductivity of at most 300 microSiemens/cm, preferably at most 250 microSiemens/cm, more preferably at most 240 microSiemens/cm, even more preferably at most 200 microSiemens/cm, preferably at most 180 or even at most 160 microSiemens/cm, more preferably at most 140, or even at most 120 microSiemens/cm, and even more preferably at most 100 microSiemens/cm. The inventors have found that this conductivity may be achieved, even with input streams that give rise to aqueous suspensions as input to step a which have a conductivity of about 20000 microSiemens/cm. The inventors have also found that this low conductivity of the solid reactor product makes it possible to manufacture bio fuel that is acceptable in conventional incinerators, and also after mixing with for example coconut as an additional source of organic matter, may result in a material which can be used as a growth medium for plants, due to its low salt content. The inventors have also found that by reducing the concentration of salts, the product of a possible additional pyrolysis step, the so-called bio char product, is better suited for use in the garden and agriculture, such as in one way or another as a soil improver in order, for example, to create structure.

In the context of the present invention, the concentration of certain substances, as well as other properties of the streams and/or products, are determined according to the measurement procedures prescribed in the Compendium for Sampling and Analysis ("Compendium voor Monsterneming en Analyse", CMA) in implementation of the waste act and the soil remediation decree of the Flemish Region (Vlaamse Gewest) of 12/01/2010, the ministerial approved version of January 12, 2010. These regulations refer to international standards where possible. For example, the conductivity of a sample or stream is specified to be measured according to European Standard EN 13038. The number of guidelines for measuring methods is too extensive to be listed here, and hence is referred to the information provided about these decrees of the Flemish Region by EMIS (Energie- en Milieu-informatiesysteem), the Energy and Environment Information System for the Flemish Region in Belgium.

In an embodiment according to the present invention, the method further comprises at least one of the following steps:
e. dry mechanical separation, for example by sieving, of at least a part of the dried organic product from step d, optionally after grinding to reduce the size of the particles, to obtain a fine dried fraction and a coarse dried fraction, wherein the fine fraction is the fraction that passes through a sieve with an opening of preferably 2 mm, more preferably of 1 mm,
f. pyrolysis of at least a part of the solid reactor product from step b, or the dried organic product from step d, or if present, the coarse dried fraction from step e, wherein preferably the solid product of the pyrolysis is dried,
g. stabilization of the fine dried fraction from step e by the addition of a nitrate and/or a sulphate, preferably with a combination of calcium nitrate and magnesium sulphate, for example to counteract undesirable reactions with other elements during later use,
h. mixing of at least a part of the dried organic product from step d, and/or of the coarse dried fraction from step e, and/or of the fine dried fraction from step e, and/or of the stabilized product from step g, with an organic matter, wherein said organic matter is preferably derived from coconuts, preferably from the husks of coconuts, more preferably from ground coconuts, even more preferably from dried ground coconuts, wherein the organic matter is preferably moistened first to make it swell, preferably under the addition of heat, is optionally subsequently chemically buffered or rendered pathogen-free, such as by addition of Ca(NO₃)₂, Mg(NO₃)₂ and/or KNO₃, and, if desirable, pressed to remove excess water, if desired washed further for further desalination, before the organic matter is mixed in step h, wherein the excess water from the press and/or the polluted washing water from this step is preferably recycled to step c, and wherein preferably the mixed product of this step h has a conductivity of at most 100 micro-Siemens/cm, preferably at most 90 microSiemens/cm, more preferably at most 80 microSiemens/cm,
i. pelletizing the dried organic product from step d, or if present, the coarse dried fraction from step e, or if present, the dried fraction from pyrolysis step f.

The inventors have found that the dry mechanical separation in step e is very suitable for further treatment of the dried organic reactor product. Although the coarse fraction can also be used, the fine dried fraction is according to the findings of the inventors even more suitable to be processed as at least a part of a growth medium for plants.

The inventors have also found that an additional pyrolysis step f may be desirable to condition the solid reactor product further to even more usable bio fuel, because the pyrolysis accomplishes an even more complete breakdown of the cellular structure of the biomass, such that even more water can be removed from the biomass by simple separation. Pyrolysis is a well-known technique in which in a low-oxygen environment, i.e. typically with less than 1% mol O₂ in the gas phase, a reasonably dry solid, with a dry matter content of typically about 90% by weight, is exposed for a certain period of time to a temperature of 300-800°C, preferably 400-700°C, more preferably 500-620°C. The desired exposure time increases as the temperature decreases. Because of this treatment, organic matter will decompose into a gas phase and a carbon rich solid residue, which when using natural starting material is often called "bio char". The gases are then separated, by means of condensation fluids can be recovered from this, but the gases are preferably used as fuel to generate heat, such as for reaching the high temperatures required for the pyrolysis step.

The inventors have found, if the dried organic product from step d, or a part thereof that has been separated such as for example in step e, has to be kept over a long period of time and its properties are to be retained as much as possible, that it is desirable to stabilize this solid matter as required in step g, by addition of a nitrate or a sulphate, preferably with a combination of calcium nitrate and magnesium sulphate. This increases the shelf life of the product in the long term, mainly due to the buffering effect of these additions, because of which undesired further reactions can be prevented. This can be very important for certain applications, such as for the use of the product as a growth medium for plants, or as an ingredient therefore, such as in plant cultivation.

The inventors have found that the dried organic product from step d, or a part thereof that has been separated such as for example is prescribed in step e, preferably after having been stabilized as prescribed in step g, is preferably mixed with an organic matter, such that a mixture is obtained which is very suitable as a growth medium for plants, such as potting soil. The inventors prefer to use organic matter that is derived from coconuts, as mentioned above. This coconut matter is preferably moistened first to make it swell up. Hereby the inventors preferably make use of the low-salt water product from step c. This has the advantage that no fresh water has to be supplied, and allows more water and/or moisture to be present in the supplied waste streams which are processed in the method of the present invention. The swelling is promoted by performing the moistening under the addition of heat. The inventors prefer to also perform chemical buffering, resulting in a product rendered free of pathogens, which is less subject to biological growth. In the moistening step, preferably an excess of water is used, and the unnecessary water may then subsequently be removed for example by pressing. Also, an additional washing step may further be provided in order to reduce the salt concentration even further. This additional washing step preferably takes place before the organic matter is mixed with the organic product obtained from the waste streams after thermal hydrolysis. The thus obtained mixed product from step h preferably has a conductivity of at most 100 microSiemens/cm.

The inventors prefer to pelletize at least one of the dry products of the method according to the present invention, i.e. to press it into pellets or tablets that are larger than the grain size of the product as it is formed. This allows for greater ease in the further treatment of the pellets, and for less dust formation when being marketed, stored and transported.

In one embodiment of the method according to the present invention, the dried organic product from step d, or if present, the fine dried fraction from step e, or if present, of the stabilized product from step g, or if present, the mixture from step h, is usable as growth medium or growth substrate for plants, such as for example potting soil in horticulture.

In one embodiment of the method according to the present invention, the dried organic product from step d and/or the coarse dried fraction from step e, and/or the product of the pyrolysis in step f, and/or the pelletized product from step i, is/are usable as bio fuel. The inventors prefer to use the pelletized product from step i on the basis of the coarse dried fraction from step e as bio fuel. This is easy to handle in conventional incinerators and in the supply plants thereof for solid fuels. The inventors have found that this product, and preferably the product of the pyrolysis in step f, and/or the pelletized product from step i, is also very usable as a soil improver in agriculture and horticulture. In itself, the product is barely biodegradable, it gives an airy structure to a soil, and it is very effective to hold nutrients for uptake by plants through the roots. In this way, this use of this product as manufactured according to the current invention is a way to constitute a distinct bonus for the "carbon footprint", because carbon-containing solid matter is manufactured from plant waste matter, in which the carbon mainly originates from CO₂ in the atmosphere, which is then worked into the ground and which remains buried over a long period of time. That way, the greenhouse effect is reversed by inserting carbon from the air back into the ground, which achieves the opposite effect compared to the combustion of fossil fuels, which is regarded as the main culprit of the greenhouse effect.

In one embodiment of the method according to the present invention, the separation in step c is at least partially performed by means of membrane distillation, preferably in parallel, but even more preferably in a cascade of at least two membrane distillation steps, wherein in cascade the retentate from the previous step serves as input to the next step, optionally followed by a further evaporation of the retentate from the last membrane distillation step. The inventors have found that membrane distillation is a very suitable method for separating the liquid reactor product from step b in a salt-rich concentrate and in a low-salt water product. The low-salt water product of membrane distillation is of a very high purity, such that it is immediately usable in the various steps of the method according to the present invention in which very pure water is needed, such as the various washing steps that are part of the method, the moistening of the coconut matter, and even in order to generate steam that can be used to heat up the reactor in step a and to pressurize it. The inventors preferably use the Memstill® technology for this separation, which is available from TNO in the Netherlands. This technology is described in more detail in WO 2008/054207 A1.

In one embodiment of the method according to the present invention, the liquid reactor product from step b, preferably after the stripping in step k, if present, is subjected to a fermentation step before it is separated in step c. This fermentation allows for organic matter that is still entrained from the upstream steps, either in dissolved form or as small particles, to be mineralized, and at least partially converted to degradation products that are less disruptive in the separation of step c. The inventors prefer to provide a stripping step for the stripping of dissolved gases, such as, for example, ammonia gas, because ammonia can be disrupting to the fermentation and/or in the separation of step c, and also for the evaporation step that may be a part thereof.

In one embodiment of the present invention, the inventors also provide a filter for the input to the separation step c, more in particular if this step uses membranes. A filtration of the input ensures that the separation plant is polluted less quickly and can remain in operation longer between successive rinse cycles or cleaning cycles.

In one embodiment of the method according to the present invention, the fermentation step is an anaerobic fermentation step, and the gas from the fermentation step is at least partly used as fuel in a steam boiler to generate at least a part of the steam that is employed for heating up, optionally combined with building of the required pressure, which is necessary for the thermal hydrolysis in step a. This provides the advantage that less or no additional fuel has to be used for this generation of steam.

In one embodiment of the method according to the present invention, the solid reactor product from step b is washed with water before it is dried in step d. This has the advantage that the salt content of the solid matter can be reduced further, such that the solid products of the method according to the present invention are more acceptable in their more salt-sensitive application areas.

In one embodiment according to the present invention, the method makes use of industrial residual heat, for example originating from electricity generation, as heat source in at least one of the following activities, if present:
(i) reheating of the biomass in the input to step a, preferably combined with agitation, and optionally combined with blowing air through, until at least partial release of the amount of nitrogen contained therein, preferably released as ammonia (NH₃) or ammonia gas, and wherein preferably the released ammonia gas is converted by reaction with sulphuric acid (H₂SO₄) into ammonium sulphate,
(ii) thermal hydrolysis in step a, for example for an at least partial heating of the aqueous suspension,
(iii) at least one of the membrane distillation steps in step c,
(iv) evaporation in step c,
(v) drying in step d,
(vi) heating of the dried ground coconuts in step h.

Industrial residual heat in the context of the present invention is defined as heat which becomes available at such a low temperature that it is difficult to still be usefully deployed and has to be discharged at least largely in the environment, such as by cooling against ambient air, against coolant water, or is discharged directly in a cooling tower by a combination of partial evaporation and heating of ambient air, which can be done with natural draft or with forced draft. Residual heat is normally available at temperatures of at most 100°C, preferably at most 90°C, and more preferably at most 80°C. The recycling of this residual heat by the method according to the present invention may reduce the use of high-grade and thus expensive thermal energy, thus favorably influencing the economic viability of the method.

The inventors prefer to combine the method according to the present invention with a method for generating electricity. In one embodiment of the present invention, this electricity generation is done by means of the generation of pressurized steam and the driving of an electric generator by a steam turbine which is driven by at least a part of this pressurized steam. Preferably, a side stream of the generated pressurized steam is employed for the heating, optionally combined with the building of the required pressure, which is necessary for the thermal hydrolysis in step a. Preferably, the low-salt water product, if necessary after an additional purification step, is of a sufficient purity to be used as input water for the generation of the steam for the steam turbine which drives the electric generator. This gives the advantage that less or no fresh water must be supplied for electricity generation. The pressurized steam can, in principle, be generated by any heat source in all known ways, such as, for example, by a nuclear reaction, i.e. nuclear fission or nuclear fusion.

The inventors prefer, however, a method in which the electricity generation makes use of heat that is released by the combustion of fuel. With such an installation, other ways of co-operation with the method according to the present invention are possible.

In one embodiment of this method according to the present invention, gases that originate from the anaerobic fermentation of organic matter, are, at least in part, used as fuel, preferably those gases from the fermentation step in which the liquid reactor product from step b is fermented before it is separated into step c.

In a preferred embodiment of this method according to the present invention, the combustion makes use of a fluidized bed gasifier. This provides the advantage that a variety of types of solid fuel can be burned.

For example, this preferred embodiment provides the possibility to employ pig manure and/or chicken manure as at least a part of the fuel during the combustion.

In one embodiment of the method according to the present invention in which solid fuel is burned, at least a part of the dried organic product from step d, and/or the coarse dried fraction from step e, and/or the product of the pyrolysis in step f is used as at least a part of the fuel during the combustion.

The inventors also prefer to pre-treat the input to the thermal hydrolysis in step a to render it more appropriate to step a.

For example, in one embodiment of the method according to the present invention, the biomass in the polluted waste stream is diluted to a dry matter content in a range of 10 to 30% by weight, preferably of 15 to 25% by weight, more preferably of 18 to 22% by weight, for the thermal hydrolysis in step a. The inventors have found that an aqueous suspension having this concentration of dry matter is more suitable for the thermal hydrolysis step. Such a suspension is sufficiently diluted to be easy to handle, and yet it is sufficiently concentrated to properly utilize the available reactor volume in step a. As the reactor is pressure equipment, that part of the plant is relatively expensive and a good degree of utilization of the reactor results in an economic advantage.

In the context of this invention, a dry matter content is measured by first weighing a sample and then allowing it to dry out in a drying oven at 105°C during a period of at least 24 hours, preferably until the weight of the sample remains approximately stable, after which the dry weight is measured, which is then expressed relative to the weight of the original sample.

The inventors prefer to remove inert solid matter from the input to the thermal hydrolysis step a as far as possible. For example, in one embodiment of the method according to the present invention, from the aqueous suspension, if necessary after being diluted to the desired dry matter content, preferably by sedimentation in one or, if desired, in two successive steps, a slurry of the heavier particles is separated out, with, for example, in one slurry the majority of the gravel present in the aqueous suspension, and in another or in the same slurry most of the sand present in the aqueous suspension, to thereby obtain the aqueous suspension that can serve as input to step a. This additional separation of inert solid matter from the input to the thermal hydrolysis step a provides the advantage that this inert matter does not need to be heated up and cooled down, and that it cannot cause mechanical problems, for example by settling in places where this is undesirable.

In one embodiment of the method according to the present invention, at least a part of the biomass is supplied as solid matter and it is preferably subjected to a dry separation as a pre-treatment step, which consists of at least one of the following steps:
(i) fractioning or grinding to reduce the size of the particles,
(ii) separating the particles that contain non-ferrous metals, such as copper, aluminium and/or zinc, in a separation step which is based on eddy currents,
(iii) separating magnetic particles such as those that contain ferrous metals, such as iron, by a magnetic separation step, preferably after the separation of the non-ferrous metals in step (ii),
(iv) separating, preferably the product after separating out the metal particles, by sieving into a fine fraction, preferably a fraction of which the particles pass through a sieve with openings of at most 30 mm, which is mixed with at least one liquid, preferably an liquid manure from farming, to jointly constitute the polluted waste stream, and into a coarse fraction, wherein preferably the coarse fraction is separated, more preferably by means of a "wind shifter" or wind separator into a light fraction, for example with mainly plastic particles, a light fraction which is preferably collected in a collecting container, into a heavy fraction with preferably mainly round parts, for example mainly stones, and into a middle fraction with for example mainly wood particles, where said middle fraction is preferably recycled to and added to the supply of the biomass as solid matter.

The fractioning is preferably done in a low-speed fractionating device, for example of the type Dyno 5 as available from the company Rentex. The fractionating device ensures the detachment of grass from the other components with which it could be joined or with which it could be entangled, such that it can be well sieved out. In addition, the various components are pulled apart to be able to remove the ferrous and non-ferrous metals afterwards, preferably in that order. The inventors have determined that this fractioning step is advantageous if very polluted waste streams are processed, such as agricultural residues, but more importantly if roadside grass or verge cuttings are processed, or even other waste streams that are contaminated by for example litter. In this way, these streams can be broken up into as many as possible of its individual components, such that a dry separation can be performed, which may potentially result in more side streams that are recoverable in more specific reprocessing plants.

The separation of non-ferrous metals from waste streams, preferably of the broken up solid waste streams resulting from the fractioning step, may be done with any known technique, preferably with a separation step based on eddy currents. In this way, the non-ferrous metals, such as copper, aluminium or zinc, can be isolated in a side stream which contains these metals in high concentrations, and which may qualify for the recycling of these metals, which may or may not be separated from each other.

The separation of ferrous metals is an even better known technique, which can also be applied here in order to form a side stream of ferrous metals, which may qualify for the recycling of these metals, which may or may not be separated from each other. This separation of ferrous metals can be done before or after the separation of the non-ferrous metals, depending on whether the technique for the separation of one kind of metals allows the presence of the other kind of metals.

For the preparation of the aqueous suspension which is intended to be subjected to the thermal hydrolysis in step a, it is recommended to work with a relatively limited size of particles of solid matter. Therefore, the method according to the present invention preferably provides a sieving step, where the smaller particles are allowed to be incorporated in the polluted waste stream, or more particularly the aqueous suspension, and the larger particles are processed differently. The coarse fraction of this sieving step is then preferably further separated, such as by a "wind shifter" or wind separator, into a light fraction and a heavy fraction. For this separation, the inventors preferably use a wind shifter, for example of the model Hurrikan as available from the company Komptech. The light fraction typically includes significant amounts of plastic particles, which are preferably collected in a collecting container and can be removed for further processing, such as for energy recovery. Through the wind shifter also the round parts are separated, such as stones and also wood particles. This heavy fraction can be guided through a stone separator to separate the stones from the wood. The stones can be removed and the wood particles can, for example, be recycled to the input as extra biomass.

The inventors have found that some of the treatment steps of the method according to the present invention may give rise to the development of gases which, if discharged as such into the atmosphere, can result in odor problems or other inconveniences for the local residents or for the environment. In one embodiment of the invention according to the present invention, the above gas phase or the gas phase of the activities of at least one, and preferably all of the elements from the list consisting of:
(i) dry separating as pre-treatment step of the biomass supplied as solid matter,
(ii) separating, preferably by a wind shifter or wind separator, of the coarse fraction after the dry separation of (i),
(iii) heating of the reactor input to step a,
(iv) drying in step d,
(v) separating in step e, and
(vi) each storage tank of an input, intermediate, or final product of the method, is removed and purified before the emission thereof into the atmosphere, preferably by passing through a cyclone filter and/or a wet scrubber, more preferably followed by a bio-filter and/or a dust filter, and/or a cooler and/or a water condenser. This provides the advantage that the operation of the method according to the present invention is less troublesome to humans and the environment.

The inventors have determined that some of these gas streams may contain ammonia gas. Because this is a specific and very troublesome problem that is best addressed separately, the inventors prefer to treat at least one, and preferably all of the ammonia gas containing gas streams separately. Therefore, the inventors preferably provide the subjecting of the gas phase above or the gas phase which is released during the activities occurring upstream of the thermal hydrolysis, among which preferably the stripping in step k, if present, the heating of the biomass in the input to step a, the mixing of different waste streams in order to obtain the polluted waste stream as input to the thermal hydrolysis, each of the storage maintainers in which the waste streams that are supplied are stored, to a washing step for washing out ammonia gas (NH₃).

The inventors have determined that the optional pyrolysis step may give rise to harmful exhaust gases. In one embodiment of the present invention in which pyrolysis is conducted, the inventors therefore prefer to provide for a provision in which the gas phase formed in the pyrolysis is passed to a post-combustion step.

In what follows, now with reference to the flow charts in the figures, a preferred embodiment of the present invention is described, without the invention being limited to this embodiment.

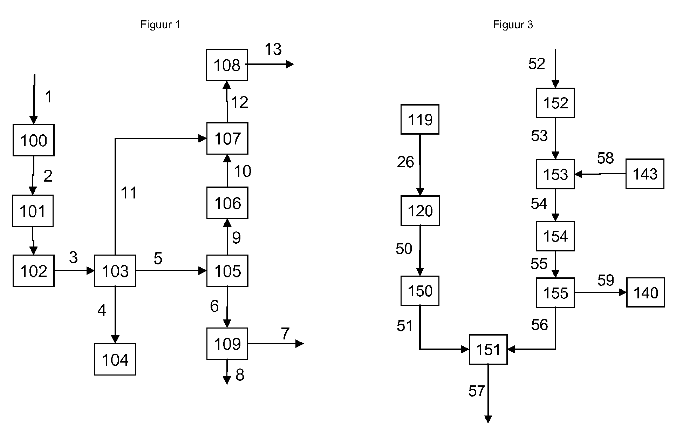

Figure 1 shows how a solid waste stream 1, for example an agricultural residue such as verge cuttings, is pre-treated by first breaking it up into smaller pieces by a low-speed fractionating device 100, causing biomass such as grass to be detached from the other solid parts to which it is attached or with which it is entangled, subsequently ferrous and non-ferrous metals are removed using known techniques in the metal separation steps 101 and 102 to form a metal-free stream 3 which is then sieved in sieve 103. The separated metals are stored and removed for recovery. For the sieve, the inventors like to use a Star Screen model L-25 from Komptech. The particles smaller than 3 cm from the sieve form stream 4, which is further passed to mixer 104. The particles larger than 3 cm form stream 5 which is separated in wind shifter 105 into on one side a light fraction 9 with mainly plastic parts that is blown to and stored in storage container 106, suitable to be burnt, and on the other side a heavy fraction 6 with mainly round parts, which are then separated in stone separator 109 into a stream of stones 8 and a stream of wood particles 7. The latter are, optionally combined with additional biomass from the wind shifter, preferably recycled as biomass, upstream in the process, for example to fractionating device 100.

The air stream 10 of which the plastic parts have been left in the storage container 106 is together with the air 11 above the sieve 103, above stone separator 109, and above a possible intermediate storage at as many points as possible where needed extracted and further stripped of dust particles in preferably first a cyclone filter 107 whose output 12 is still passed through dust filter 108 before it can be discharged as purified air 13.

Figure 4 shows how the stream 4 with the solid particles smaller than 3 cm from sieve 103 is preferably mixed in continuous mixer 104 with a liquid waste stream 15 from storage 105. This is for example liquid manure or another liquid manure stream from agriculture. The storage 105 may be heated to prevent freezing, and is covered to prevent odor problems. If a supply of solid waste requires no pre-treatment, it can be immediately inserted into continuous mixer 104. The mixed product from device 104 is a suspension 16, which can be pumped, and which is further diluted in the washing drum 110, preferably provided with an additional sieve, with a stream 35 of dirty water from storage 140, and homogenized to form an aqueous suspension 17 containing the biomass. Stream 17 typically has a dry matter content of about 40% by weight, a chlorine ion content of about 2000 to 3000 ppm by weight, and a pH of about 6. From this suspension 17, in sand trap 111 a stream 18 with gravel (particles larger than 1 mm) and sand is separated, preferably using a Huber Circular Grit Trap HRSF or a Passavant Geiger Noggerath sand separator SR, and what remains is passed as current 19 to storage 113 which serves as an input tank to the thermal hydrolysis step a. The stream 18 with the gravel and the sand is then preferably washed again in sand washing 112, making use of a stream 36 of dirty water from storage 140 in order to recover as much biomass as possible, preferably up to at most 3% by weight of organic matter, and the washing water 37 with the biomass is then also passed to storage 113. In the same plant, the sand is dewatered to 10% moisture. Preferably, the inventors use a Rotamat Grit washer RoSF 4/t or a Passavant Geiger Noggerath sand washer here.

In storage tank 113, the input to the thermal hydrolysis step is preferably already heated as much as possible with residual heat from a nearby source (not shown), while during stirring air is blown through in order to remove as much ammonia gas as possible. At a temperature of preferably 80°C, the aqueous suspension 20 is passed to the pulper 114, where it is further heated with low pressure steam 22 before it is heated and pressurized to the conditions required for the thermal hydrolysis in reactor 115 with higher pressure steam 21. The product of reactor 115 is released in flash tank 116 whereby low pressure steam 22 is released, which is used for the heating in pulper 114. For these steps, the inventors prefer to use a plant available from Cambi or Sustec. The hydrolyzed reactor product 23 is then separated in separator 117 into a liquid reactor product 27 and a solid reactor product 24. Separator 117 may for example use a Passavant Geiger NSI combi device, or a Huber SE Rotamat Complete Ro5. Typically, particles up to 5 mm are retained in this separator. At the same time, sand can also be separated, which can be washed to less than 3% by weight of organic matter and dewatered to 10% moisture. For this purpose, the above-mentioned sand washing devices may be employed. The solid organic product from the separator 17 typically has a dry matter content of about 40% by weight, and is washed in wash press 18 with low-salt water from storage 143 to wash out even more of its salts. The inventors like to use several wash presses in parallel, for example of the type Huber screenings Wash Press WAP/sl/hp or Passavant Geiger Noggerath wash press. The washing water 28 with the therein dissolved salts is passed together with the liquid reactor product 27 to device 130 in which as many of the small organic particles as possible are removed, for example in a micro-sieve, or by flotation in a dissolved air flotation (DAF) plant such as the Huber Dissolved air flotation plant HDF. In addition to this, a chemical treatment may take place to influence precipitation and grain factor and to remove certain elements such as zinc and cadmium. The organic substances that are hereby retained, are once more pressed as stream 29 in chamber filter press 131 for further dewatering, for example available from Passavant-Geiger, and the solid product 30 thereof is washed in the washing step 132 with low-salt water 43 from storage 143, to wash out even more salts. For this purpose, a membrane filter press may be used, such as available from Passavant-Geiger. The washing water from step 132 is recycled to device 130. The press water 34 from press 131 and the water 33 from device 130 then go to the dirty water storage 140, from where it becomes available for the dilution in washing drum 110 and for the washing in sand washing 112. The washed solid matter stream 25 from wash press 118 and the washed solid product 32 from washing step 132 are passed to indirect dryer 119, and the dried product 26 goes to sieve 120. The combined input to indirect paddle dryer 119 typically has a dry matter content of 50% by weight, and a conductivity of 200-250 microSiemens/cm. Sieve 120 sieves coarse particles of at least 1 mm out from the smaller fine fraction. Sieve120 may, for example, be of the type Liwell LF as available from Hein Lehman.

A part of dirty water 38 from storage 140 goes to fermenter 141 for a further reduction of the organic matter present, to avoid problems with this in the downstream separator. The product 39 of the fermenter is preferably still filtered in a carbon filter (not shown), to retain organic residues and sludge, before being separated in separator 142 into a salt-rich concentrate 44, which is removed, and a low-salt water product 40, which is passed to the storage 143 for pure water, from where it is available as pure water in washing step 118 and washing step 132, and as input water to the steam generator 144 which generates the high-pressure steam 21 that is required in reactor 115. The separator 142 preferably consists of two membrane distillation steps in series, wherein the second step further thickens the concentrate of the first step, and this is followed by an inspissator in which by simple evaporation the concentrate is further thickened, preferably to a salt-rich concentrate 44 in the form of crystallized solid matter which can be disposed of as solid waste stream, and in which the majority of the salts, metals and particularly the heavy metals in soluble form from the polluted waste streams which serve as input are found.

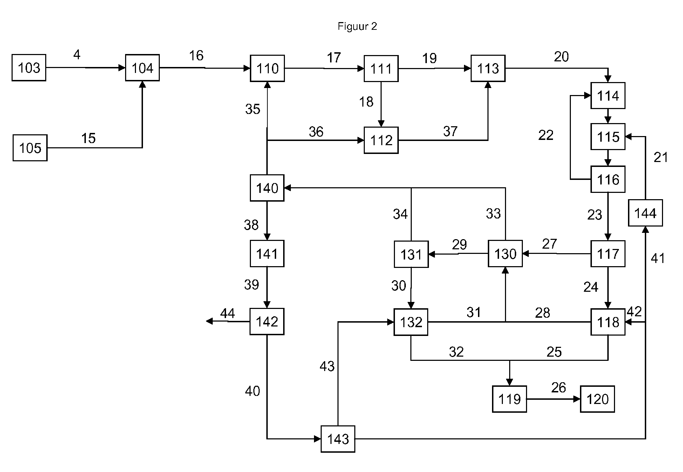

Not shown in Figure 2 is how the gas from the fermenter 141 is used as fuel for the steam generator 144. Also not shown is how the streams of dirty water 33 and/or 34 are stripped of ammonia gas by, for example, air stripping. The gaseous product of this stripping, preferably together with ammonia gas containing gas phases from storage 113, of continuous mixer 110, of storage 105, and/or of any other intermediate storage where ammonia gas is released, is preferably washed, for example with a solution of sulphuric acid to form ammonium sulphate, and/or passed through a biofilter in order to produce as little gaseous ammonia emission as possible.

Preferably, at the appropriate places residual heat from a nearby source is used, preferably as residual heat from electricity generation (not shown). This is preferably employed for the membrane distillation in separation 142, for the evaporation in that same step 142, for heating up the input 20 in or after storage 113, and for the drying in step 119.

Also not shown is how the dried product 26, or a product past the sieve 120 may be pelletized. When necessary, one of the solid products, before or after drying and/or before or after sieving, may be subjected to an additional pyrolysis step (not shown).

Also not shown is how the air from the belt dryer 119 is washed in a wet scrubber and is passed through a biofilter. Then, a large part of the water may still be condensed out (not shown). The air above the sieve 120 may be stripped of dust by a cyclone filter and/or a dust filter (not shown).

Figure 3 shows how the dried product 26 is passed from dryer 119 to sieve 120. From sieve 120, a part 560, for example the fine fraction, may be stabilized against fermentation by the addition of calcium nitrate and magnesium sulphate, to improve the carbon/nitrogen ratio, before it may be mixed in a mixer or drum mixer 151 to growth medium 57 with extra organic matter 56. As source for this extra organic matter, the inventors like to use pressed blocks (5 kg) of dried ground husks of coconuts supplied as stream 52. These are preferably broken up first in fractionating device 152, the stream 53 of reduced coconut particles is then moistened in sweller 153 with pure water from storage 143, typically with about 7 liters of water per kg of supplied coconut in stream 52, and under supply of heat, preferably using residual heat as already explained above. In this way, 1 kg of supplied coconut matter can be reprocessed into a volume of 10-15 liters of coconut matter. The moist coconut matter 54 is then chemically buffered with nitrates such as calcium nitrate in step 154, for example in a mixing screw in which the swelling can still occur further, after which the excess water is pressed out from the buffered stream 55 in press 155, preferably followed by an extra wash press step (not shown) to limit the amount of salt in the final product after the buffering. Excess water and washing water 59 from the press and additional washing step may be filtered once more in a micro-sieve (not shown) before it is passed to the dirty water storage 140 for reprocessing as described above. Any solid matter that is sieved out may be recycled to a point upstream in the flow chart, for example to the fermenter 141.

Now that the present invention has been fully described, the person skilled in the art will realize that the invention can be implemented with a wide range of parameters within what is claimed, without, however, departing from the spirit and the scope of the invention. As is understood by the person skilled in the art, the general invention, as defined by the claims, comprises other preferred embodiments which are not specifically mentioned.

## Claims

1. A method for the reprocessing of a polluted waste stream that contains biomass, which method comprises the steps of
a. thermal hydrolysing at least a part of the polluted waste stream in the form of an aqueous suspension, said suspension having a conductivity of at least 100 microSiemens/cm (µS/cm), in a reactor at a temperature of at least 125°C and lower than 200°C and at a sufficiently high pressure to thereby keep water liquid, to form a hydrolyzed reactor product, followed by an expansion step wherein the pressure of the reactor product is reduced, and wherein also salts are washed out from the biomass into the aqueous phase,
b. separating the hydrolyzed reactor product from step a into a solid reactor product and into a liquid reactor product, and wherein the liquid reactor product is at least partially recycled, directly or indirectly, to step a,
c. separating at least a part of the liquid reactor product from step b in a salt-rich concentrate and a low-salt water product, wherein the concentrate is salt-rich due to water-washable salts, wherein the salt-rich concentrate is removed, and wherein the low-salt water product is at least partially recycled, directly or indirectly, to step a and/or b, and
d. drying the solid reactor product from step b to a dried organic product.

2. The method according to claim 1 wherein the aqueous suspension in step a has at least one of the following characteristics:
(i) a dry matter content of at most 50% by weight, and optionally at least 5% by weight,
(ii) a conductivity of at least 100 microSiemens/cm (µS/cm), and optionally of at most 50000 µS/cm,
(iii) a pH of at least 2, and optionally at most 9,
(iv) a chlorine content in solution, mainly as chlorine ions, of at least 100 ppm by weight, and optionally at most 10000 ppm by weight, and this measured on the basis of the whole of aqueous phase and solid matter,
(v) a nitrogen content (N) of at least 100 ppm by weight, and optionally at most 15000 ppm by weight, and this measured on the basis of the whole of aqueous phase and solid matter,
(vi) a phosphorus content (P) of at least 50 ppm by weight, and optionally at most 7000 ppm by weight, and this measured on the basis of the whole of aqueous phase and solid matter,
(vii) a potassium content (K) of at least 100 ppm by weight, and optionally at most 15000 ppm by weight, and this measured on the basis of the whole of aqueous phase and solid matter,
(viii) a sulphates content (SO₄), mainly as sulphate ions, of at least 10 ppm by weight, and optionally at most 1500 ppm by weight, and this measured on the basis of the whole of aqueous phase and solid matter,
(ix) a magnesium content (Mg) of at least 10 ppm by weight, and optionally at most 1500 ppm by weight, and this measured on the basis of the whole of aqueous phase and solid matter,
(x) a calcium content (Ca) of at least 5 ppm by weight, and optionally at most 800 ppm by weight, and this measured on the basis of the whole of aqueous phase and solid matter,
(xi) an iron content (Fe) of at least 10 ppm by weight, and optionally at most 1500 ppm by weight, and this measured on the basis of the whole of aqueous phase and solid matter,
(xii) a zinc content (Zn) of at least 5 ppm by weight, and optionally at most 800 ppm by weight, and this measured on the basis of the whole of aqueous phase and solid matter,
(xiii) a manganese content (Mn) of at least 5 ppm by weight, and optionally at most 800 ppm by weight, and this measured on the basis of the whole of aqueous phase and solid matter,
(xiv) a copper content (Cu) of at least 2 ppm by weight, and optionally at most 800 ppm by weight, and this measured on the basis of the whole of aqueous phase and solid matter,
(xv) a total metals content, being the metals selected from the list of chemical elements in the IUPAC periodic table of elements, the version of June 22, 2007 and wherein the element groups are numbered from 1 to 18, occurring in the groups denoted by numbers 1, 2, 3, 4, 5, 6, 7, 8, 9, 10, 11, 12, 13, 14 and 15, except for hydrogen (H), and which in that periodic system are located to the left of the semi-metals or metalloids, which lie on a diagonal line from boron (B) to astatine (At), mainly in ionic form, of at least 100 ppm by weight, and optionally at most 15000 ppm by weight, and this measured on the basis of the whole of aqueous phase and solid matter,
(xvi) a heavy metals content, being the metals selected from the list of chemical elements in the IUPAC periodic table of elements, the version of June 22, 2007 and wherein the element groups are numbered from 1 to 18, occurring in the groups denoted by numbers 3, 4, 5, 6, 7, 8, 9, 10, 11, 12, 13, 14 and 15, and which in that periodic system are located to the left of the semi-metals or metalloids, which lie on a diagonal line from boron (B) to astatine (At), and in particular the metals are selected from the list consisting of cadmium (Cd), lead (Pb), mercury (Hg), zinc (Zn), and iron (Fe), of together at least 100 ppm by weight, and optionally at most 15000 ppm by weight, and this measured on the basis of the whole of aqueous phase and solid matter.

3. The method according to claim 1 or 2, wherein the polluted waste stream is selected from the list consisting of solid organic waste, dry agricultural residues such as heather sods, grass and/or straw, salt water biomass such as seaweed and/or algae, compostable waste such as fruit/vegetables/garden waste from municipal waste as collected from households, wet residues from the food industry, grass, straw and reed, pruning waste, roadside grass, verge cuttings, pig manure, chicken manure, cow manure, liquid manure from these or other forms of farming, purge streams containing organic matter, digestate from the ethanol fermentation or fermentation of sludge or of residue of organic matter, such as of sludge from biological oxidation of waste water, such as of waste water purification plants, and mixtures thereof, and preferably a mixture with at least a part verge cuttings and a part liquid manure.

4. The method according to any one of the preceding claims, wherein the thermal hydrolysis in step a is performed at a temperature of at least 130°C, and optionally preferably at most 195°C.

5. The method according to any one of the preceding claims, wherein the solid reactor product as part of step b, before it is dried in step d, is washed with water to remove more salts, preferably accompanied by the use of low-salt water product originating from step c.

6. The method according to any one of the preceding claims, wherein the liquid reactor product from step b, before it is recycled, and preferably together with the saline washing water from the washing of the solid reactor product as part of step c, if present, is subjected to a step j for the separation of suspended particles, preferably suspended organic particles, and preferably by a micro-sieve or a dissolved air flotation (DAF) separation step, before it is recycled to step a and/or it is recycled to step c.

7. The method according to any one of the preceding claims, wherein the liquid reactor product from step b, before it is recycled, and preferably together with the saline washing water from the washing of the solid reactor product as part of step c, if present, and/or the liquid product from the separation of suspended particles in step j, is subjected to a step k which includes a stripping for the removal of ammonia gas (NH₃), preferably by means of blowing air through and/or the injection of steam.

8. The method according to any one of the preceding claims, further comprising at least one of the following steps:
e. dry mechanical separation, for example by sieving, of at least a part of the dried organic product from step d, optionally after grinding to reduce the size of the particles, to obtain a fine dried fraction and a coarse dried fraction, wherein the fine fraction is the fraction that passes through a sieve with an opening of preferably 2 mm, more preferably of 1 mm,
f. pyrolysis of at least a part of the solid reactor product from step b, or of the dried organic product from step d, or if present, of the coarse dried fraction from step e, wherein preferably the solid product of the pyrolysis is dried,
g. stabilization of the dried organic product from step d, and/or if present, the coarse dried fraction from step e, and/or the fine dried fraction from step e, by the addition of a nitrate and/or a sulphate, preferably with a combination of calcium nitrate and magnesium sulphate,
h. mixing at least a part of the dried organic product from step d, and/or of the coarse dried fraction from step e, and/or of the fine dried fraction from step e, and/or of the stabilized product from step g, with an organic matter, wherein said organic matter is preferably derived from coconuts, preferably from the husks of coconuts, more preferably from ground coconuts, even more preferably from dried ground coconuts, wherein the organic matter is preferably moistened first to make it swell, preferably under the addition of heat, optionally subsequently chemically buffered or rendered pathogen-free, such as by addition of Ca(NO₃)₂, Mg(NO₃)₂ and/or KNO₃, and, if desirable, pressed to remove the excess water, if desired washed further for further desalination, before the organic matter is mixed in step h, wherein the excess water from the press and/or the polluted washing water from this step is preferably recycled to step c, and wherein preferably the mixed product of this step h has a conductivity of at most 100 microSiemens/cm,
i. pelletizing the dried organic product from step d, or if present, of the coarse dried fraction from step e, or if present, of the dried fraction from pyrolysis step f.

9. The method according to any one of the preceding claims, wherein the dried organic product from step d, or if present, the fine dried fraction from step e, or if present, the stabilized product from step g, or if present, the mixture from step h, is usable as growth medium or growth substrate for plants, for example as potting soil in horticulture.

10. The method according to any one of the preceding claims, wherein the separation in step c is at least partially performed by means of membrane distillation, preferably in parallel, but even more preferably in a cascade of at least two membrane distillation steps, wherein in cascade the retentate from the previous step serves as input to the next step, optionally followed by a further evaporation of the retentate from the last membrane distillation step.

11. The method according to any one of the preceding claims which makes use of industrial residual heat, for example from electricity generation, as heat source in at least one of the following activities, if present:
(i) reheating of the biomass in the input to step a, preferably combined with agitation, and optionally combined with blowing air through, until at least partial release of the amount of nitrogen contained therein, preferably released as ammonia (NH₃) gas,
(ii) thermal hydrolysis in step a, for example for an at least partial heating of the aqueous suspension,
(iii) at least one of the membrane distillation steps in step c,
(iv) evaporation in step c,
(v) drying in step d,
(vi) heating of the dried ground coconuts in step h.

12. The method according to any one of the preceding claims, wherein the biomass in the polluted waste stream is diluted to a dry matter content in a range of 10 to 30% by weight, preferably of 15 to 25% by weight, more preferably of 18 to 22% by weight, for the thermal hydrolysis in step a.

13. The method according to claim 12, wherein, from the diluted waste stream, preferably by sedimentation in one or, if desired, in two successive steps, a slurry of the heavier particles is separated, wherein for example in one slurry the majority of the gravel is present in the aqueous suspension, and in another or the same slurry the majority of the sand is present in the aqueous suspension, to thereby obtain the aqueous suspension as input to step a.

14. The method according to any one of the preceding claims, wherein at least a part of the biomass is supplied as solid matter and is subjected to a dry separation as a pre-treatment step, which consists of at least one of the following steps:
(i) fractioning or grinding to reduce the size of the particles,
(ii) separating the particles that contain non-ferrous metals, such as copper, aluminium and/or zinc, in a separation step which is based on eddy currents,
(iii) separating magnetic particles such as those that contain ferrous metals, such as iron, by a magnetic separation step, preferably after the separation of the non-ferrous metals in step (ii),
(iv) separating, preferably of the product after separating the metal particles, by sieving into a fine fraction, preferably a fraction of which the particles pass through a sieve with openings of at most 30 mm, which is mixed with at least one liquid, preferably an liquid manure from farming, to jointly constitute the polluted waste stream and more particularly the aqueous suspension, and into a coarse fraction, wherein preferably the coarse fraction is separated, more preferably by means of a "wind shifter" or wind separator into a light fraction, for example with mainly plastics particles, a light fraction which is preferably collected in a collecting container, into a heavy fraction with preferably mainly round parts, for example mainly stones, and into a middle fraction with for example mainly wood particles, where said middle fraction is preferably recycled to and added to the supply of the biomass as solid matter.

15. The method according to any one of the preceding claims, wherein the gas phase above or the gas phase of the activities of at least one and preferably all of the elements from the list consisting of
(i) dry separating as a pre-treatment step of the biomass supplied as solid matter,
(ii) separating, preferably by a wind shifter or wind separator, of the coarse fraction after the dry separation of (i),
(iii) heating of the reactor input to step a,
(iv) drying in step d,
(v) separating in step e, and
(vi) each storage tank of an input, intermediate, or final product of the method, is removed and purified before emission into the atmosphere, preferably by passing through a cyclone filter and/or a wet scrubber, more preferably followed by a bio-filter and/or a dust filter, and/or a cooler and/or a water condenser.
